# EUROPÄISCHE PATENTANMELDUNG

(11) **EP 1 826 983 A1**
(43) Veröffentlichungstag der Anmeldung: **29.08.2007**
(21) Anmeldenummer: 07002508.5
(22) Anmeldetag: 06.02.2007
(51) Int. Cl.: H04L 29/06, H04L 29/08

(54) **Interkartenkommunikation**

(30) Priorität: 22.02.2006 DE 102006008249
(71) Anmelder: Giesecke & Devrient GmbH, 81677 München (DE)
(72) Erfinder: Spitz, Stephan, Dr., 81245 München (DE); Effing, Wolfgang, 85659 Forstern (DE)

(57) **Zusammenfassung**

Die Erfindung betrifft ein Verfahren zur Kommunikation zwischen zumindest einer ersten Chipkarte (C₁) und einer zweiten Chipkarte (C₂) und gegebenenfalls noch weiteren Instanzen (Cᵢ), bei dem die Instanzen (C₁, C₂, ... , Cᵢ) über ein Netzwerk (3) eine Peer-to-Peer-Kommunikation ausführen, die insbesondere auf RPC-Befehlen basieren kann.

## Beschreibung

Die Erfindung liegt auf dem Gebiet der Chipkartentechnik und betrifft insbesondere die Kommunikation zwischen mehreren Chipkarten untereinander und gegebenenfalls zu anderen Kommunikationsinstanzen.

In Bezug auf die Kommunikation von Chipkarten war es bisher im Stand der Technik vorgesehen, dass eine Chipkarte mit einem Terminal kommuniziert. Eine Interaktion zwischen Chipkarten war bisher nicht oder - wie die nachstehende Druckschrift aus dem Stand der Technik zeigt - nur mit Einschränkungen vorgesehen.

Im Stand der Technik zeigt die US 2004/0147285 A1 ein Verfahren zur Datenübertragung zwischen verschiedenen Instanzen über ein internetbasiertes Netzwerk. Bei diesem Verfahren kommunizieren mehrere mobile Datenträger, hier Smartcards, über ein Netzwerk. Das Kommunikationsverfahren ist jedoch beschränkt auf nur eine Anwendung, wie in diesem Fall die Anwendung des Telefonierens. Nachteiligerweise kann dieses Verfahren jedoch nicht eingesetzt werden, um eine Kommunikation zwischen mehreren Instanzen bereitzustellen, das unabhängig von der jeweiligen Anwendung ist und bei dem auch mehrere Instanzen kommunizieren können, die unterschiedlichen Anwendungen zugeordnet sind.

Bisher basierte die Chipkartenkommunikation nach dem ISO-Standard 7816 auf einem Master-Slave-Prinzip, bei dem ein Master, ein Chipkarten-Terminal, einen (z.B. lesenden) Zugriff ausführt, den ein Slave, die Chipkarte, bedient. Bei der bekannten Kommunikation von und zur Chipkarte ist es vorgesehen, dass die Kommunikation stets vom Terminal angestoßen wird. Die Karte reagiert lediglich auf die Befehle des Terminals und sendet nie aktiv ohne äußeren Anstoß Daten.

Die bisherigen Kommunikationsprinzipien, nämlich dass eine Kommunikation lediglich zwischen Chipkarte und Terminal vorgesehen ist und dass ein reiner Master-Slave-Mechanismus angewendet wird, schränken die Möglichkeiten bei der Kommunikation deutlich ein und sind deshalb mit Nachteilen im Hinblick auf Flexibilität, Erweiterungsmöglichkeiten und Einsatzmöglichkeiten verbunden.

Die vorliegende Erfindung hat sich deshalb zur Aufgabe gestellt, einen Weg aufzuzeigen, mit dem die Kommunikation zwischen Chipkarten untereinander ermöglicht werden soll und der die bisherigen Möglichkeiten in Hinblick auf die Kommunikation von Chipkarten erweitern und verbessern soll. Darüber hinaus sollen die vorstehend erwähnten Nachteile der bisherigen Verfahren aus dem Stand der Technik teilweise oder vollständig überwunden werden.

Diese Aufgabe wird durch die beiliegenden Hauptansprüche gelöst, insbesondere durch ein Kommunikationsverfahren, durch ein Kommunikationssystem, durch eine Schnittstelle, durch eine Kommunikationseinrichtung und ein Computerprogrammprodukt.

Im Folgenden wird die Erfindung im Hinblick auf die verfahrensgemäße Lösung der Aufgabe beschrieben. Die hier erwähnten Merkmale, Vorteile und/oder alternativen Ausführungsformen sind ebenso auf die anderen Aufgabenlösungen zu übertragen. Damit können auch die anderen Aufgabenlösungen gemäß den Merkmalen weitergebildet sein, die in Zusammenhang mit dem Verfahren in den Unteransprüchen oder in der Beschreibung erwähnt werden.

Das Verfahren wird nachstehend beispielhaft für eine Kommunikation zwischen einer ersten Chipkarte und einer zweiten Chipkarte beschrieben. Dies ist jedoch nicht beschränkend zu verstehen, so dass das Kommunikationsverfahren im Rahmen dieser Erfindung ebenfalls auf andere Instanzen, insbesondere andere mobile Datenträger, Sicherheitstoken oder Terminals angewendet werden kann oder auf eine Kommunikation zwischen mehr als zwei Kommunikationsinstanzen, insbesondere zwischen mehr als zwei mobilen Datenträgern.

Die vorstehend erwähnte Aufgabe der Erfindung wird insbesondere durch ein Kommunikationsverfahren zwischen mehreren Instanzen, insbesondere zwischen mehreren mobilen Datenträgern, gelöst, bei dem die Instanzen über ein Netzwerk miteinander in Kommunikationsverbindung stehen und bei dem die Instanzen über eine Peer-to-Peer-Kommunikation, d.h. ohne zentralen Server, kommunizieren.

Im Rahmen dieser Erfindung meint der Begriff "Kommunikation" jede Art von Datenübertragung bzw. Datenaustausch zwischen Instanzen in einem Netzwerk. Der Begriff ist umfassend zu verstehen und nicht auf eine bestimmte Form der Datenübertragung oder auf eine bestimmte Hierarchiestufe des OSI-Schichtenmodells der ISO, ein bestimmtes Protokoll oder auf bestimmte Schnittstelle im Rahmen der Datenübertragung beschränkt. Der Inhalt der übertragenen Daten ist völlig frei, so dass es sich bei den Daten um jede beliebige Art von digitalen Datenobjekten handeln kann (wie z. B. Textdaten, Daten in einem Zahlenformat, kryptographische Daten und/ oder komprimierte Daten etc.).

Eine "Instanz" ist eine Einheit in dem Kommunikationsnetzwerk und steht über das Netzwerk in einer Kommunikationsverbindung mit zumindest einer anderen Instanz. Die Bedeutung des Begriffes "Instanz" ist im Rahmen dieser Erfindung nicht beschränkend zu verstehen und umfasst neben mobilen Datenträgern, wie z. B. Chipkarten, Smart Cards etc., auch jede andere Art von Bauteilen oder Vorrichtungen mit einem Prozessor bzw. Mikroprozessor und entsprechenden Schnittstellen zum Datenaustausch. Eine Instanz kann deshalb neben einer Chipkarte auch ein Chipkartenterminal, ein Mittler bzw. ein Element einer Middleware, ein sonstiges rechnerbasiertes Lesegerät, ein handelsüblicher Computer oder ein Sicherheitstoken sein. Die Eigenschaften der jeweiligen Instanz, wie z. B. die Größe, die Art oder die Ausstattung der Instanz, ist dabei unerheblich. Insbesondere kann es sich bei einer Chipkarte um eine kontaktlose oder um eine kontaktbehaftete Chipkarte handeln. Bei einer kontaktbehafteten Karte ist eine galvanische Kopplung zwischen der Karte und dem jeweiligen Terminal notwendig (indem z. B. die Karte in das Terminal eingesteckt werden muss, damit eine Datenübertragung möglich wird). Im Unterschied dazu ist bei kontaktlosen Karten ein Datenaustausch zwischen Karte und Terminal auch bei räumlicher Entfernung möglich. Darüber hinaus können bei dem erfindungsgemäßen Verfahren auch Kombikarten, so genannte Dual-Interface-Karten, die beide Funktionen (kontaktlos und kontaktbehaftet) auf sich vereinen, zum Einsatz kommen.

Bei dem "Terminal" handelt es sich um eine Instanz in dem Netzwerk. Die Art des Terminals ist dabei unerheblich. So kann es sich um ein tragbares oder um ein stationäres Terminal, um eine reine Kontaktierungseinheit, um ein komplexeres Terminal mit einem Prozessor oder um ein sonstiges Gerät bzw. Device, das für eine Datenübertragung und gegebenenfalls für eine Spannungsversorgung der Chipkarte bestimmt ist.

Bei einem Netzwerk handelt es sich um ein Netzwerk zwischen (mikro-) prozessor-gestützten Instanzen und kann aus mehreren Subnetzwerken bestehen. Üblicherweise handelt es sich um ein WAN-Netz (WAN: Wide Area-Network) und um ein offenes Netzwerk. Es ist jedoch auch möglich, dass andere, z. B. proprietäre oder lokale Netzwerke (Local Area Network - LAN) hinzu geschlossen werden. In der bevorzugten Ausführungsform handelt es sich bei dem Netzwerk um das Internet.

Im Gegensatz zu den bisherigen Kommunikationsverfahren in Bezug auf Chipkarten basiert das erfindungsgemäße Kommunikationsprinzip auf dem Peer-to-Peer-Prinzip. Das bedeutet, dass alle kommunizierenden Instanzen grundsätzlich gleichberechtigt sind und sowohl Dienste in Anspruch nehmen, als auch Dienste zur Verfügung stellen können. Mit anderen Worten kann eine Instanz erfindungsgemäß sowohl Client als auch Server sein. Dies stellt einen wesentlichen Unterschied zum bisherigen Verfahren dar, bei dem eine Chipkarte stets nur als Slave und nie als Master betrieben wurde, also nie aktiv Kommunikationsaufträge ausgegeben hat. Bei der Peer-to-Peer-Kommunikation wird also das bisherige Client-Server-Prinzip aufgelöst, so dass eine Instanz gleichzeitig Client und Server enthält. Darüber hinaus können die Instanzen als Arbeitsstationen genutzt werden und auch andere informations-technische Aufgaben im Netz übernehmen.

Die Datenübertragung zwischen den Instanzen kann grundsätzlich durch viele verschiedene Befehle ausgelöst werden. Eine Kategorie von Befehlen bezieht sich auf Remote-Procedure-Calls (im Folgenden kurz als RPC-Befehl abgekürzt). Dabei handelt es sich um Funktionsaufrufe über die Netzwerk-schnittstelle, die auch Funktionen oder Prozesse auf anderen über ein Netzwerk zusammengeschlossenen Instanzen (und damit nicht-lokal) aufrufen oder ausführen können.

Erfindungsgemäß ist das Kommunikationsverfahren so ausgebildet, dass das Ausführen von RPC-Befehlen unterstützt wird. Es ist jedoch nicht zwingend erforderlich, dass die Kommunikation durch RPC-Befehle ausgelöst wird. In einer bevorzugten Ausführungsform kommen als Kommunikations-Mechanismus auf Applikationsebene ausschließlich RPC-Befehle zum Einsatz. In alternativen Ausführungsformen ist es möglich, den Kommunikations-Mechanismus zu erweitern, indem zusätzlich oder alternativ andere Prinzipien oder Mechanismen für die Maschine-zu-Maschine-Kommunikation zwischen den mobilen Datenträgern, insbesondere zwischen den Chipkarten, eingesetzt werden. Im Stand der Technik sind unterschiedliche Varianten für die Gestaltung der RPC-Befehle bekannt. In diesem Zusammenhang sind z. B. die RMI-gestützten Methoden (RMI steht für Remote Method Invocation) im Java-Standard oder Webservices, basierend auf dem SOAP oder dem XML-RPC-Protokoll, zu nennen. Alle gängigen RPC-Typen können für die erfindungsgemäße Kommunikation eingesetzt werden. Der RPC-Client und der RPC-Server können dafür in der Chipkarte selbst (und damit in der ersten Instanz) oder in einer anderen Instanz (z. B. dem Terminal) vorhanden sein.

Ein wesentlicher Vorteil der vorliegenden Erfindung ist darin zu sehen, dass die Kommunikation ohne zentrale Vermittlung auskommt d.h. völlig frei und flexibel ist und nicht auf ein Zusammenspiel von bestimmten Arten von PC- und Chipkarten-Anwendung beschränkt ist. Damit wird es möglich, dass zwei Instanzen, von denen zumindest eine eine Chipkarte ist, Daten austauschen, die gegebenenfalls unterschiedliche Anwendung betreffen, z. B. eine Telefonkartenanwendung, eine Gesundheitskartenanwendung, eine Zugangskartenanwendung und/ oder Zahlungskartenanwendungen etc.

In der bevorzugten Ausführungsform handelt es sich sowohl bei der ersten als auch bei der zweiten Instanz um einen mobilen Datenträger und insbesondere um eine Chipkarte. In diesem Fall betrifft das Verfahren also den Datenaustausch zwischen zwei Chipkarten. Alternative Ausgestaltungen des erfindungsgemäßen Verfahrens betreffen hier den Datenaustausch zwischen mehr als zwei Chipkarten. Bei der Ausführungsform handelt es sich um eine direkte Kommunikation zwischen den Chipkarten, insbesondere kontaktbehafteten Chipkarten, über ein Netzwerk, ohne dass eine logische Einheit, die diese Daten zwischenverarbeitet, benötigt wird. Alternative Ausgestaltungen der Erfindung betreffen den Datenaustausch zwischen einer Chipkarte und einer anderen Instanz, wobei die andere Instanz ein Terminal oder ein anderes Netzwerkelement sein kann.

In einer weiteren vorteilhaften Ausführungsform ist/ sind zumindest eine der beiden Instanzen oder beide Instanzen netzwerkfähig. Vorzugsweise sind beide Instanzen netzwerkfähig ausgebildet. In diesem Fall ist es möglich aber nicht notwendig, eine Mittlerschicht (Middleware) vorzusehen. Abhängig vom jeweiligen Anwendungsfall kann eine Mittlerschicht für die Umsetzung von Chipkarten Funktionalitäten in eine RPC-Schnittstelle auf dem Terminal im Rahmen der Kommunikation jedoch durchaus sinnvoll sein.

Handelt es sich bei den Chipkarten um Chipkarten nach dem Standard ISO-7816, so muss erfindungsgemäß eine netzwerkfähige Mittlerschicht, bestehend aus Hard- und/ oder Softwaremodulen, ausgebildet sein, die eine Umsetzung der Chipkarten-Funktionalitäten für eine Peer-to-Peer-Kommunikation übernimmt.

In einer weiteren vorteilhaften Weiterbildung kann eine zentrale Verwaltungseinheit mit einer Datenbank zwischengeschaltet sein, um den Verbindungsaufbau zwischen den Kommunikationsinstanzen für die Peer-to-Peer-Kommunikation in dem Netzwerk zu unterstützen.

Ein bevorzugtes Anwendungs-Szenario für das erfindungsgemäße Verfahren betrifft eine Ende-zu-Ende-Sicherheit beim Datenaustausch bzw. bei einer Kommunikation zwischen mehreren Chipkarten. In dieser Ausführungsform ist es vorgesehen, dass die Daten bei der Peer-to-Peer-Kommunikation zwischen den Chipkarten verschlüsselt übertragen werden. Für die Verschlüsselung kann eine beliebige kryptographische Technik angewendet werden. Das erfindungsgemäße Verfahren ist dabei weder auf einen bestimmten symmetrischen oder asymmetrischen Krypto-Algorithmus beschränkt, noch ist es auf ein bestimmtes Protokoll oder auf ein sonstiges Verfahren im Rahmen der Verschlüsselung festgelegt, und ist darüber hinaus auch unabhängig von verwendeten Schlüsseln. Durch die verschlüsselte Peer-to-Peer-Kommunikation zwischen den Chipkarten wird es erfindungsgemäß möglich, einen kryptographisch gesicherten Datenaustausch sicherzustellen, ohne dass eine Sicherungsschicht aufgebrochen werden muss. Die Sicherungsschicht ist in einem hierarchischen Schichtenmodell unterhalb der Anwendungsprotokoll-Ebene angeordnet und kann optional eingesetzt werden für eine authentisierte und verschlüsselte Kommunikation zwischen den beteiligten Instanzen. In der bevorzugten Ausführungsform handelt es sich bei der Sicherheitsschicht um eine RPC-Security-Schicht. Im Rahmen einer Authentisierung und insbesondere im Rahmen der Verschlüsselung kann erfindungsgemäß ein Challenge-Response-Verfahren zum Einsatz kommen. In alternativen Ausgestaltungen der Erfindung können hier auch andere Verfahren zum Einsatz kommen. Erfindungsgemäß kann der kryptographische Handshake, wie z. B. nach dem vorstehend erwähnten Challenge-Response-Verfahren, direkt zwischen den beiden Chipkarten stattfinden, um die verschlüsselte Kommunikation durch das Aushandeln eines Sitzungsschlüssels zu initiieren.

Ein weiteres Anwendungs-Szenario für das erfindungsgemäße Verfahren betrifft einen Schlüssel-Backup. Im Rahmen einer Verschlüsselung ist es notwendig, Schlüssel zu generieren und diese auszutauschen: Kryptographische Schlüssel können und müssen also von einer Chipkarte zur anderen übertragen werden. Dabei ist es jedoch eine zwingende Voraussetzung, dass ein Schlüssel niemals außerhalb einer gesicherten Umgebung im Klartext (und damit ungesichert und lesbar) vorliegt. Das erfindungsgemäße Verfahren kann nun angewendet werden, um Schlüssel oder andere sensitive Daten von einer Chipkarte auf eine andere Chipkarte zu übertragen, ohne dass ein Backup auf einer Zwischeninstanz erfolgen muss. Notwendige Voraussetzung für dieses Vorgehen ist die vorstehend beschriebene Ende-zu-Ende-Sicherheit.

Weitere Aufgabenlösungen bestehen in einem Kommunikationssystem, in einem Kommunikationsmodul, das zumindest teilweise in Softwareund/ oder Hardwaremodulen und insbesondere als Kommunikationsschnittstelle realisiert sein kann, und in einer Kommunikationseinrichtung, die als Instanz im Rahmen des erfindungsgemäßen Kommunikationsverfahrens dient und insbesondere eine Chipkarte, Smartcard, ein Sicherheitstoken oder ein anderer mobiler Datenträger, sowie ein Terminal sein kann. Darüber hinaus kann die Kommunikationseinrichtung komplexer ausgebildet sein und ein Gerät betreffen, wie z. B. ein Handy, ein PDA oder ein sonstiges elektronisches Gerät, das mit einem mobilen Datenträger und mit Mitteln zur Kommunikation mit einer anderen Instanz ausgestattet ist und wobei das Kommunikationsverfahren auf dem vorstehend beschriebenen erfindungsgemäßen Verfahren basiert. In einer bevorzugten Ausführungsform ist es vorgesehen, dass die Kommunikationseinrichtung insbesondere eine Chipkarte umfasst. Eine weitere Aufgabenlösung ist in einem Computerprogrammprodukt zu sehen, dass Mittel umfasst, die zur Ausführung der Schritte des oben beschriebenen erfindungsgemäßen Verfahrens bestimmt sind.

Zusätzliche vorteilhafte Ausführungsformen ergeben sich aus den Unteransprüchen.

In der folgenden detaillierten Figurenbeschreibung werden nicht einschränkend zu verstehende Ausführungsbeispiele mit deren Merkmalen und weiteren Vorteilen anhand der Zeichnung besprochen. Es zeigen:
Fig. 1 eine schematische Darstellung eines Kommunikations-Szenarios zwischen zwei Chipkarten gemäß einer bevorzugten Ausführungsform der Erfindung,
Fig. 2 eine schematische Darstellung eines Kommunikations-Szenarios zwischen zwei Chipkarten über eine Mittlerschicht gemäß einer weiteren bevorzugten Ausführungsform der Erfindung,
Fig. 3 eine schematische Darstellung von Hardwaremodulen und Softwaremodulen eines Mittlers der Mittlerschicht gemäß Fig. 2 und
Fig. 4 einen Protokollstack, der bei einer erfindungsgemäßen Kommunikation zum Einsatz kommen kann.

Die vorliegende Erfindung wird nachfolgend am Beispiel der Kommunikation zwischen einer ersten Chipkarte C₁ und einer zweiten Chipkarte C₂ beschrieben. Es liegt jedoch ebenso im Rahmen der Erfindung neben den Chipkarten C₁, C₂ noch andere Instanzen vorzusehen. So ist es einerseits möglich, noch weitere Chipkarten Cᵢ zu berücksichtigen, so dass die Kommunikation zwischen mehreren Chipkarten erfolgt. Andererseits ist es auch möglich, noch andere Instanzen zu berücksichtigen, wie z. B. ein Chipkarten-Terminal oder eine andere mikro-prozessorgestützte Instanz.

Die erste Chipkarte C₁ und die zweite Chipkarte C₂ sind über ein Netzwerk 3 in datentechnischer Hinsicht miteinander verbunden.

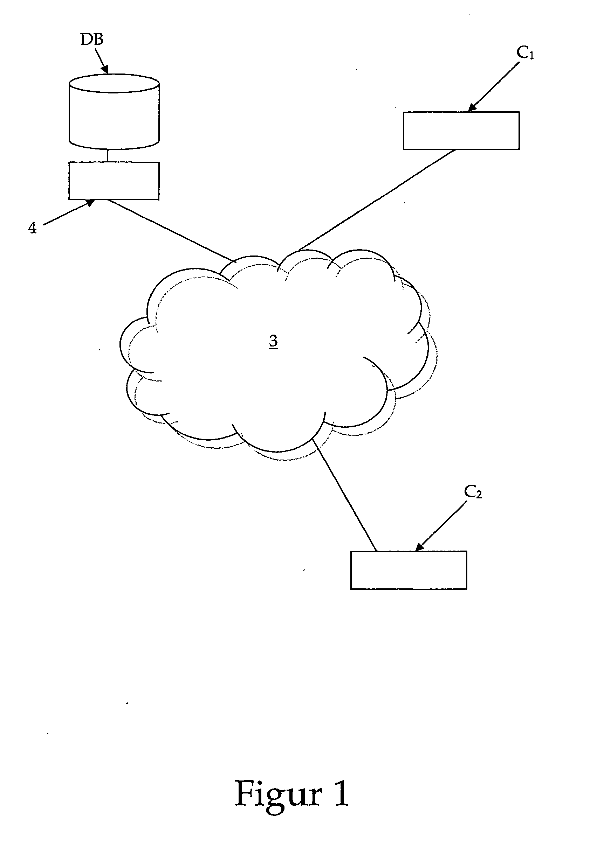

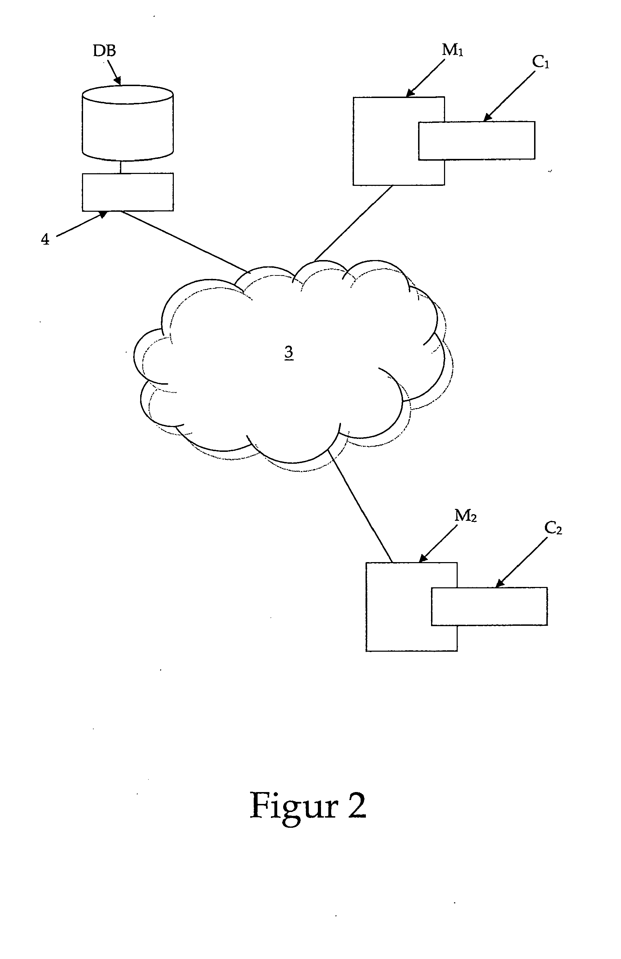

Wie in den Fig. 1 und 2 gezeigt, kann an das Netzwerk 3 zusätzlich als optionales Merkmal eine zentrale Verwaltungseinheit 4 (die im Folgenden auch als Server bezeichnet wird) an das Netzwerk 3 angeschlossen sein. Der zentrale Server 4 greift vorzugsweise auf eine ihm zugeordnete Datenbank DB zu.

In einer ersten bevorzugten Ausführungsform des erfindungsgemäßen Verfahrens ist keine Mittlerschicht, umfassend Mittler M₁, M₂, ..., Mᵢ ausgebildet und die Instanzen C₁, C₂ sind netzwerkfähig. In alternativen Ausgestaltungen kann die Ausbildung einer Mittlerschicht - obwohl nicht zwingend erforderlich - durchaus als optionales Merkmal vorgesehen sein.

Fig. 1 zeigt diese erste bevorzugte Ausführungsform der Erfindung, bei der die beiden Chipkarten C₁, C₂ über das Netzwerk 3 direkt miteinander kommunizieren. Bei dem Netzwerk 3 handelt es sich um ein Peer-to-Peer-Netzwerk, so dass die beteiligten Instanzen C₁, C₂ in gleichberechtigter Form miteinander interagieren. In dieser Ausführungsform sind die beiden Instanzen C₁, C₂ netzwerkfähig. Falls es sich bei dem Netzwerk um das Internet handelt, sind die beiden Chipkarten C₁, C₂ internetfähig. Entsprechendes gilt auch für kommunizierende Sicherheitstoken oder anderen Instanzen.

In einer zweiten bevorzugten Ausführungsform der Erfindung, die schematisch in Fig. 2 gezeigt ist, wird eine Mittlerschicht (Middleware) mit Mittlern M₁, M₂ in das Kommunikationssystem eingebunden. Falls die Chipkarten C₁, C₂ nach dem Standard ISO-7816 ausgelegt sind, ist eine netzwerkfähige Mittlerschicht M₁, M₂ vorgesehen. Die Mittler M₁, M₂ sind - wie in Fig. 2 gezeigt, jeweils einer Chipkarte C₁, C₂ zugeordnet und bestehen aus Hard- und/oder Softwaremodulen. Die Mittlerschicht bzw. die Mittler M₁, M₂ übernehmen die Umsetzung der Chipkarten-Funktionalitäten für die Peer-to-Peer-Kommunikation. In dieser Ausführungsform ist jeweils eine Chipkarte Cᵢ einem Mittler Mᵢ zugeordnet. Die Chipkarte Cᵢ selbst muss dann nicht notwendigerweise netzwerkfähig sein. In alternativen Ausführungsformen kann die Mittlerschicht auch anders strukturiert sein und durch modifizierte logische Einheiten gebildet werden, die die Kommunikationsdaten zwischenverarbeiten. Es ist hier z. B. auch möglich, die Zwischenverarbeitung von mehreren Chipkarten Cᵢ über eine logische Einheit ausführen zu lassen. Die Einheiten oder die Mittler Mᵢ dienen insbesondere einer Protokollumsetzung.

Vorzugsweise wird als Mittlerschicht eine server-basierende Middleware eingesetzt. In dieser Ausführungsform besitzen die jeweils beteiligten Internet-Chipkarten C₁, C₂, deren Kommunikationsbefehle gegebenenfalls über die server-basierte Middleware M₁, M₂ umgesetzt werden, die Möglichkeit als TCP/IP-Client Anfragen an eine andere Internet-Instanz zu richten. Falls es sich um netzwerkfähige Internet-Chipkarten C₁, C₂ handelt (so dass keine Mittler M₁, M₂ eingesetzt werden müssen), enthalten diese direkt den Client und Server. Um die Verfügbarkeit der angeforderten jeweiligen Chipkarte C₁, C₂, ..., Cᵢ zu überprüfen, kann optional der zentrale Server 4 eingesetzt werden und zwischengeschaltet sein, der alle im Netzwerk 3 aktiven Chipkarten C₁, C₂, ..., Cᵢ über eine zentrale Identifikation bzw. eine zentrale Identifikationsnummer verwaltet. Der Server 4 kann darüber hinaus für den Verbindungsaufbau (also unter anderem für das Auffinden der jeweiligen Kommunikationsinstanz) genutzt werden.

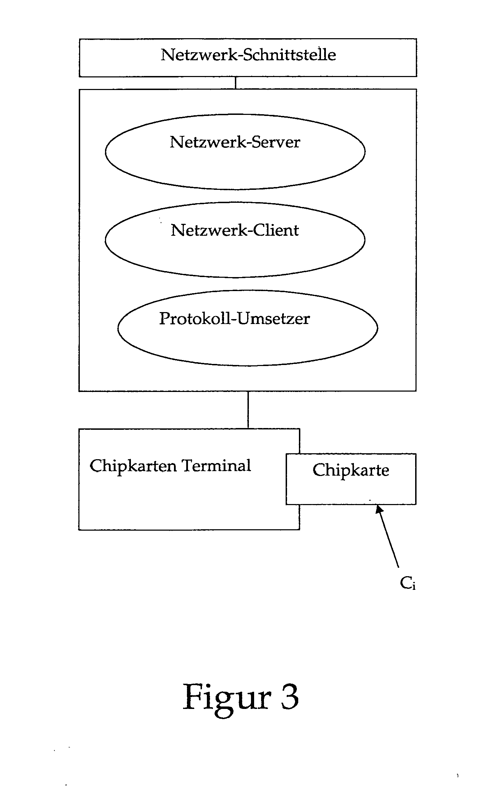

In Fig. 3 sind schematisch die jeweiligen Bestandteile eines Mittlers Mᵢ gemäß einer Ausführungsform der Erfindung dargestellt, die umfassender bereits in Zusammenhang mit Fig. 2 erläutert worden ist. Die hier dargestellten Bauteile bzw. Module können sowohl als Hardware- und/oder als Softwaremodule ausgebildet sein. Bei einem in Fig. 3 dargestellten Chipkarten-Terminal und bei einer Netzwerk-Schnittstelle handelt es sich um Hardware-Bauteile, während es sich bei einem - ebenfalls in Fig. 3 dargestellten - Netzwerk-Server, einem Netzwerk-Client und einem Protokollumsetzer um Softwaremodule des Mittlers Mᵢ handelt. Die vorstehend erwähnten Module bzw. Bauteile können jederzeit durch andere Bauteile mit gleicher Funktionalität ersetzt werden und darüber hinaus können sie durch andere Bauteile erweitert werden. Sie sind jedoch notwendig, um für ISO-7816-konforme Chipkarten C₁, C₂ in dem Netzwerk 3 miteinander kommunizieren zu lassen. In diesem Zusammenhang sei nochmals auf den Umstand verwiesen, dass netzwerkfähige Internet-Chipkarten C₁, C₂ (die ohne Mittler M₁, M₂ auskommen) den Client und den Server jeweils direkt enthalten.

In der bevorzugten Ausführungsform werden als Kommunikations-Mechanismus auf Applikationsebene entfernte Funktionsaufrufe, so genannte RPC-Befehle für die Maschine-zu-Maschine-Kommunikation zwischen den beteiligten Chipkarten C₁, C₂ eingesetzt. Erfindungsgemäß können alle im Stand der Technik bekannten Arten von RPC-Befehlen für diese Kommunikation verwendet werden, insbesondere RMI-Befehle nach dem Java-Standard oder Webservices, die auf dem SOAP-Protokoll (Simple Object Access Protocol) oder auf dem XML-RPC-Protokoll basieren. Erfindungsgemäß können der RPC-Client und der RPC-Server in der Chipkarte C₁, C₂ selbst oder - wie in Fig. 3 abgebildet - in einem Chipkarten-Terminal ausgebildet sein. Dieses Merkmal ist jedoch optional.

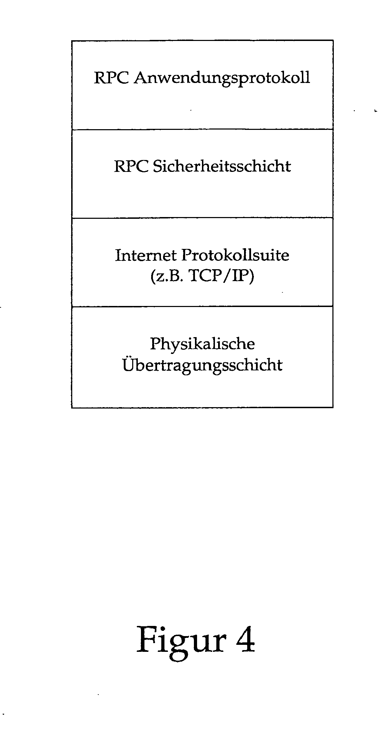

In Fig. 4 ist ein Protokollstack dargestellt, der in der bevorzugten Ausführungsform bei der Kommunikation zwischen den Chipkarten C₁, C₂ unter Einsatz von RPC-Befehlen verwendet wird. Entsprechend der Strukturierung des ISO-OSI-Schichtenmodells ist auf der obersten Ebene (in der obersten Schicht) ein Anwendungsprotokoll, insbesondere ein RPC-Protokoll vorgesehen. Darunter kann als optionales Merkmal eine Sicherungsschicht (bzw. Security Layer) vorgesehen sein, die - in der Ausführungsform unter Verwendung von RPC-Befehlen - als RPC-Sicherungsschicht für eine authentisierte und verschlüsselte Kommunikation verantwortlich ist. Die Kommunikation über das Internet wird von einem Protokoll aus einer Internet-Protokoll-Suite abgewickelt und vorzugsweise über das TCP/IP-Protokoll. Alternativ dazu sind jedoch auch andere Protokolle der Transport- und/oder Netzwerkschicht anwendbar. Für den physikalischen Transport kommen beliebige im Stand der Technik bekannte kontaktbehaftete und kontaktlose Protokolle in Frage. Als kontaktbehaftete Protokolle sind z. B. folgende Protokolle zu nennen: SLIP, PPP, USB, MMC, Ethernet etc. Als Beispiele für kontaktlose Protokolle sind Protokolle nach dem Standard ISO 14443, NFC, Zig-Bee etc. zu nennen. Die vorstehend erwähnten Protokolle seien jedoch nur beispielhaft aufgeführt und können in anderen Ausführungsformen durch alternative Protokolle ersetzt werden. Applikationsprotokolle für die Mensch-zu-Maschine-Kommunikation über TCP/IP (für Webseiten, E-mail etc.) wie z. B. HTML oder SMTP kommen hier jedoch nicht in Frage.

Wie in Fig. 3 dargestellt, ist es erfindungsgemäß möglich, das Chipkarten-Terminal als Gateway einzusetzen, um die vorstehend erwähnten Protokolle der physikalischen Übertragungsschicht umzusetzen.

Ein mögliches Anwendungs-Szenario für die erfindungsgemäße Lösung der Aufgabe ist in elektronischen Gesundheits-Infrastrukturen zu sehen, wie beispielsweise ECC/ e Health-Infrastrukturen, die einen Datenaustausch im Gesundheitswesen betreffen. Diese Anwendung sei jedoch lediglich beispielhaft erwähnt, da andere Anwendungen ebenso im Rahmen dieser Erfindung liegen, wie z. B. Anwendungen im Zahlungsverkehr, auf dem Gebiet des Telefonwesens, Anwendungen als Gesundheitskarte oder Zugangskarte etc. Im Rahmen des erfindungsgemäßen Verfahrens können somit ein erster mobiler Datenträger, der für eine ersten Anwendung bestimmt ist und ein zweiter mobiler Datenträger, der für eine zweite Anwendung bestimmt ist, miteinander kommunizieren.

Abschließend sei darauf hingewiesen, dass die Beschreibung der Erfindung und die dargestellten Ausführungsbeispiele grundsätzlich nicht einschränkend im Hinblick auf eine bestimmte physikalische Realisierung der Erfindung zu verstehen sind und somit auch in verschiedenster Weise modifiziert werden können, ohne den Bereich der Erfindung zu verlassen. Für einen Fachmann ist es insbesondere offensichtlich, dass die Erfindung auch als heterogenes System teilweise oder vollständig durch Software- und/oder Hardware-Module und/ oder auf mehrere physikalische Produkte - dabei insbesondere auch Computerprogrammprodukte - verteilt realisiert werden kann.

## Patentansprüche

1. Verfahren zur Kommunikation zwischen zumindest einer ersten Instanz (C₁) und einer zweiten Instanz (C₂), bei dem die erste Instanz (C₁) ein mobiler Datenträger ist und bei dem die zweite Instanz (C₂) ebenfalls ein mobiler Datenträger ist, bei dem die Instanzen (C₁, C₂) über ein Netzwerk (3) in Kommunikationsverbindung stehen und bei dem das Kommunikationsverfahren als Peer-to-Peer-Kommunikation ausgebildet ist und wobei die erste Instanz einen entfernten Prozeduraufruf (Remote Procedure Call) der zweiten Instanz verarbeitet.

2. Verfahren nach zumindest einem der vorstehenden Patentansprüche , **dadurch gekennzeichnet, dass** der Schritt des Verarbeitens ein Empfangen des entfernten Prozeduraufrufs, ein Ausführen von durch den Prozeduraufruf vorgegebenen Funktionen und/oder Programmen und ein Senden eines Ergebnisses des Schritt des Ausführens an die zweite Instanz umfasst.

3. Verfahren nach zumindest einem der vorstehenden Patentansprüche, **dadurch gekennzeichnet, dass** das Verfahren eine Kommunikation zwischen Instanzen (C₁, C₂, ..., Ci) unterstützt, die jeweils unterschiedlichen Anwendungen zugeordnet sein können.

4. Verfahren nach zumindest einem der vorstehenden Patentansprüche, **dadurch gekennzeichnet, dass** die erste und/ oder die zweite Instanz (C₁, C₂) als Client und als Server (4) fungieren können.

5. Verfahren nach zumindest einem der vorstehenden Patentansprüche, **dadurch gekennzeichnet, dass** zumindest eine der Instanzen (C₁, C₂, ..., Cᵢ) netzwerkfähig ist und in einer direkten Kommunikationsverbindung mit einer jeweiligen Kommunikationsinstanz steht.

6. Verfahren nach zumindest einem der vorstehenden Patentansprüche, **dadurch gekennzeichnet, dass** das Verfahren über eine netzwerkfähige Mittlerschicht, insbesondere über Mittler (M₁, M₂, ..., Mi), abgewickelt wird.

7. Verfahren nach zumindest einem der vorstehenden Patentansprüche, **dadurch gekennzeichnet, dass** zwischen den Instanzen (C₁, C₂, ..., Cᵢ) eine zentrale Verwaltungseinheit, insbesondere mit einer Datenbank (DB), zwischengeschaltet sein kann.

8. Verfahren nach zumindest einem der vorstehenden Patentansprüche, **dadurch gekennzeichnet, dass** die Kommunikation verschlüsselt ist, ohne dass eine Sicherungsschicht modifiziert werden muss.

9. Verfahren nach Patentanspruch 9, **dadurch gekennzeichnet, dass** kryptographische Schlüssel zwischen den Instanzen (C₁, C₂, ..., Cᵢ) ausgetauscht und insbesondere erneuert werden können, während ein unberechtigter Zugriff auf die Schlüssel im Klartext sicher ausgeschlossen werden kann.

10. Kommunikationssystem, zumindest umfassend:
- mehrere Instanzen (C₁, C₂, ..., Cᵢ), insbesondere eine erste und eine zweite Instanz (C₁, C₂), wobei die erste Instanz (C₁) ein mobiler Datenträger ist und die zweite Instanz (C₂) ein mobiler Datenträger ist und
- zumindest ein Netzwerk (3), über das die Instanzen (C₁, C₂, ..., Cᵢ) über eine Peer-to-Peer Kommunikation kommunizieren, die eine Ausführung von RPC-Befehlen unterstützt.

11. Kommunikationsmodul, umfassend Mittel, die zur Ausführung eines Verfahrens nach zumindest einem der Patentansprüche 1 bis 9 bestimmt sind.

12. Kommunikationseinrichtung, die als eine erste Instanz (C₁) im Rahmen einer Kommunikation mit anderen Instanzen (C₂, ..., Cᵢ) fungiert und mit einem Verfahren nach zumindest einem der Patentansprüche 1 bis 9 betrieben wird.

13. Computerprogrammprodukt, welches direkt in einen Speicher eines mobilen Datenträgers (Cᵢ) oder eines Terminals zum Zwecke einer Kommunikation mit anderen Instanzen ladbar ist, mit Programmcode-Mitteln, um alle Schritte eines Verfahrens nach zumindest einem der Ansprüche 1 bis 9 auszuführen, wenn das Programm in dem mobilen Datenträger (C) oder in dem Terminal ausgeführt wird.
